# FASCICULE DE BREVET EUROPEEN

(11) **EP 0 812 578 B1**
(45) Date de publication et mention de la délivrance du brevet: **22.12.2004**
(21) Numéro de dépôt: 97470008.0
(22) Date de dépôt: 24.03.1997
(51) Int. Cl.: A61C 1/06

(54) **Ensemble moteur-pièce à main contre-angle avec un moteur pas-à-pas**
Motor- bzw. Handstückanordnung mit einem Schrittmotor
Motor/angle hand-piece assembly with a stepping motor

(30) Priorité: 12.06.1996 FR 9607467
(43) Date de publication de la demande: 17.12.1997
(73) Titulaire: MICRO MEGA INTERNATIONAL MANUFACTURES SA, 25000 Besançon (FR)
(72) Inventeur: Badoz, Jean-Marie, 25300 Doubs (FR)
(74) Mandataire: Poupon, Michel

(56) Documents cités:
- EP-A- 0 183 972
- EP-A- 0 317 704
- EP-A- 0 525 539
- US-A- 4 744 752
- US-A- 5 356 290

## Description

La présente invention se rapporte au domaine des pièces à main utilisées en art dentaire, et plus particulièrement au domaine des pièces à main auxquelles un moteur d'entraînement est intégré.

La pratique de l'art dentaire requiert traditionnellement l'utilisation d'instruments à différentes vitesses de rotation, et avec différents types de mouvements (rotation continue, mouvement rotatif alternatif, etc...). Pour réduire les travaux de nettoyage, désinfection, stérilisation nécessaires dans le cadre de la lutte contre les risques de contamination croisée, il est intéressant de fournir au dentiste un outil qui couvre un maximum de cas d'application.

De plus, parmi les méthodes de traitement endodontique, certaines requièrent un mouvement continu, et d'autres un mouvement alternatif ou vibratoire.

Il existe des contre-angles avec moteur intégré (voir par exemple le document EP-A-0 183 972), mais ceux-ci ne permettent qu'un seul type de mouvement et ce, soit en moteur à air, soit en moteur électrique.

Aucune de ces solutions de l'art antérieur ne permet au dentiste de choisir d'une part une vitesse et d'autre part un type de mouvement.

La présente invention a entre autre pour but de remédier à ces inconvénients.

Conformément à l'invention, on propose à cette fin un nouvel ensemble moteur-pièce à main comme défini dans la revendication 1.

Ce moteur pas à pas pourra être placé soit dans le manche du contre-angle, soit dans le col du contre-angle, soit dans la tête du contre-angle.

On comprendra mieux l'invention à l'aide de la description faite ci-après d'un mode de mise en oeuvre donné à titre d'exemple non limitatif en référence à la figure unique annexée :
- la **figure unique** est une vue longitudinale d' un ensemble moteur-pièce à main suivant l'invention.

L' ensemble moteur-pièce à main comporte notamment un manche de contre-angle (1), un col de contre-angle (2) et une tête de contre-angle (3).

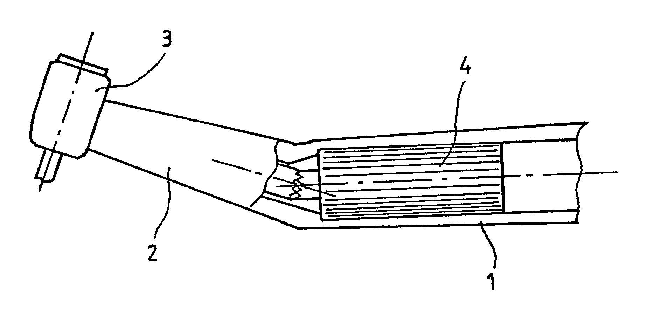

Le moteur (4) est placé dans le manche du contre-angle comme illustré à la figure 1.

Mais le moteur peut aussi être placé dans le col du contre-angle.

Enfin, le moteur peut être placé dans la tête du contre-angle.

En outre, le moteur (4) du dispositif est commandé par un dispositif de pilotage situé dans un boîtier ou ensemble de commande auquel le contre-angle est relié avec un cordon. Ce cordon intègre les différentes servitudes complémentaires connues en art dentaire (air et eau de spray, air de refroidissement).

D'autre part, le boîtier ou l'ensemble de commande peut être intégré à l'unit dentaire.

L'utilisation dans l'ensemble moteur-pièce à main, et plus particulièrement à contre-angle, d'un moteur de type moteur pas à pas permet au dentiste de bénéficier de tous les avantages de ce type de moteur, à savoir :
- rotation à droite ou à gauche,
- asservissement en vitesse (vitesse continue en travail),
- régulation précise de la vitesse,
- programmation de mouvement combiné (rotation à droite et à gauche...).

De plus, en effectuant des rotation droite et gauche de faible amplitude angulaire, on arrive à générer une vibration dans un instrument cannulaire, ce qui permet de faire des applications en endodontie comme avec une pièce à main à air.

## Revendications

1. Ensemble moteur-pièce à main à contre-angle pour l'entraînement d'instruments canalaires ou autres instruments de dentisterie comportant un manche de contre-angle (1), un col de contre-angle (2) et une tête de contre-angle (3) où le moteur est disposé dans le contre-angle **caractérisé en ce que** le moteur (4) est de type moteur pas à pas.

2. Ensemble moteur-pièce à main selon la revendication 1, **caractérisé en ce que** le moteur est placé dans le manche du contre-angle (1).

3. Ensemble moteur-pièce à main selon la revendication 1, **caractérisé en ce que** le moteur est placé dans le col du contre-angle (2).

4. Ensemble moteur-pièce à main selon la revendication 1, **caractérisé en ce que** le moteur est placé dans la tête du contre-angle (3).

5. Ensemble moteur-pièce à main selon l'une quelconque des revendications 1 à 4, **caractérisé en ce que** le moteur est commandé par un dispositif de pilotage situé dans un boîtier auquel le contre-angle est relié par un cordon.

6. Ensemble moteur-pièce à main selon la revendication 5, **caractérisé en ce que** le cordon intègre le différentes servitudes couramment utilisées en art dentaire, telles que air de spray, eau de spray ou air de refroidissement.

7. Ensemble moteur-pièce à main selon l'une quelconque des revendications 5 et 6, **caractérisé en ce que** le boîtier ou l'ensemble de commande est intégré à l'unit dentaire.

## Patentansprüche

1. Motor-Handstück-Kombination mit Kontrawinkel zum Antrieb von Kanalinstrumenten oder anderen Instrumenten der Zahnheilkunde, das einen Kontrawinkel-Handgriff (1), einen Kontrawinkel-Hals (2) und einen Kontrawinkel-Kopf (3) umfasst, wo der Motor im Kontrawinkel untergebracht ist, **dadurch gekennzeichnet, dass** der Motor (4) von der Art eines Schrittmotors ist.

2. Motor-Handstück-Kombination nach Anspruch 1, **dadurch gekennzeichnet, dass** der Motor im Kontrawinkel-Handgriff (1) platziert ist.

3. Motor-Handstück-Kombination nach Anspruch 1, **dadurch gekennzeichnet, dass** der Motor im Kontrawinkel-Hals (2) platziert ist.

4. Motor-Handstück-Kombination nach Anspruch 1, **dadurch gekennzeichnet, dass** der Motor im Kontrawinkel-Kopf (3) platziert ist.

5. Motor-Handstück-Kombination nach einem der Ansprüche 1 bis 4, **dadurch gekennzeichnet, dass** der Motor durch eine Steuerungsvorrichtung gesteuert wird, die sich in einem Gehäuse befindet, mit dem der Kontrawinkel durch einen Strang verbunden ist.

6. Motor-Handstück-Kombination nach Anspruch 5, **dadurch gekennzeichnet, dass** der Strang die verschiedenen häufig in der Zahnheilkunde angewendeten Verwendungen umfasst, wie Sprayluft, Spraywasser oder Kühlluft.

7. Motor-Handstück-Kombination nach einem der Ansprüche 5 und 6, **dadurch gekennzeichnet, dass** das Gehäuse oder die Steuereinheit in die Dentaleinheit integriert ist.

## Claims

1. Motor/hand-piece assembly having a counter-angle for the entrainment of root canal instruments or other dentistry instruments, which assembly comprises a counter-angle sleeve (1), a counter-angle collar (2) and a counter-angle head (3) where the motor is disposed in the counter-angle, **characterised in that** the motor (4) is of the stepping motor type.

2. Motor/hand-piece assembly according to claim 1, **characterised in that** the motor is placed in the counter-angle sleeve (1).

3. Motor/hand-piece assembly according to claim 1, **characterised in that** the motor is placed in the counter-angle collar (2).

4. Motor/hand-piece assembly according to claim 1, **characterised in that** the motor is placed in the counter-angle head (3).

5. Motor/hand-piece assembly according to any of claims 1 to 4, **characterised in that** the motor is controlled by a control device situated in a casing to which the counter-angle is connected by a line.

6. Motor/hand-piece assembly according to claim 5, **characterised in that** the line integrates the different means currently used in dental art, such as an air spray, a water spray or cooling air.

7. Motor/hand-piece assembly according to any of claims 5 and 6, **characterised in that** the casing or the control assembly is integrated in the dental unit.
